# FASCICULE DE BREVET EUROPEEN

(11) **EP 3 216 181 B1**
(45) Date de publication et mention de la délivrance du brevet: **24.10.2018**
(21) Numéro de dépôt: 15798516.9
(22) Date de dépôt: 28.10.2015
(51) Int. Cl.: H04L 29/06, H04L 29/08, H04L 12/721, H04L 12/715

(54) **PROCEDE DE CONTROLE DES POLITIQUES DE TRAFIC DEPUIS UN MODULE DE SECURITE DANS UN TERMINAL MOBILE**
VERFAHREN ZUR STEUERUNG VON VERKEHRSRICHTLINIEN VON EINEM SICHERHEITSMODUL IN EINEM MOBILEN ENDGERÄT
METHOD OF CONTROLLING TRAFFIC POLICIES FROM A SECURITY MODULE IN A MOBILE TERMINAL

(30) Priorité: 05.11.2014 FR 1460701
(43) Date de publication de la demande: 13.09.2017
(73) Titulaire: Orange, 75015 Paris (FR)
(72) Inventeur: CHATRAS, Bruno, F-75012 Paris (FR); CHADLI, Youssef, F-78800 Houilles (FR)
(86) Numéro de dépôt international: PCT/FR2015/052907
(87) Numéro de publication internationale: WO 2016/071606

(56) Documents cités:
- US-A1- 2012 131 222
- US-A1- 2014 254 373
- HILMI E EGILMEZ ET AL: "OpenQoS: An OpenFlow controller design for multimedia delivery with end-to-end Quality of Service over Software-Defined Networks", SIGNAL&INFORMATION PROCESSING ASSOCIATION ANNUAL SUMMIT AND CONFERENCE (APSIPA ASC), 2012 ASIA-PACIFIC, IEEE, 3 décembre 2012 (2012-12-03), pages 1-8, XP032309843, ISBN: 978-1-4673-4863-8

## Description

### 1. Domaine de l'invention

La demande d'invention se situe dans le domaine des réseaux mobiles permettant un fonctionnement en mode paquet et intégrant des fonctions avancées de contrôle de qualité de service, tels que les réseaux dits 3G, 4G ou 5G (pour 3^{ème}, 4^{ème} ou 5^{ème} génération).

Les réseaux 4G sont également connus sous l'appellation réseaux LTE ("Long Term Evolution", ou évolution long terme). Réseau 5G désigne dans la suite de ce document tout réseau de génération ultérieure à LTE.

### 2. Etat de la technique antérieure

Dans les réseaux 3G et 4G, l'architecture PCC ("Policy and Charging Control", contrôle des politiques et du comptage) définie dans la norme TS 23.203 par le 3GPP ("Third Generation Partnership Project", projet de partenariat de 3^{ème} génération) permet à un opérateur de ces réseaux d'appliquer dynamiquement des politiques d'allocation de ressources et de tarification en fonction de plusieurs critères tels que le profil des utilisateurs, les ressources disponibles, les caractéristiques et besoins des applications utilisées. Les politiques à appliquer sont déterminées par une entité appelée PCRF ("Policy and Charging Rule Function", fonction de [contrôle des] règles des politiques et du comptage) qui les transmet à des entités appelées PCEF ("Policy and Charging Enforcement Function", fonction d'application des règles des politiques et du comptage) situées dans les équipements en charge de l'acheminement du trafic. Dans le cas où l'architecture PCC s'intègre dans l'architecture EPC ("Evolved Packet Core", coeur de [réseau de] paquet évolué) également définie par le 3GPP, une entité PCEF réside dans l'équipement P-GW ("Packet Data Network Gateway", passerelle de réseau de paquets de données) donnant accès aux réseaux externes, en particulier à l'Internet. Le contrôle de la qualité de service repose alors sur une notion de "bearer" qui représente les ressources de transport allouées à un ensemble de flux de trafic devant faire l'objet d'un même traitement du point de vue de la qualité de service. A chaque "bearer" sont associés des paramètres de qualité de service à prendre en compte par la PCEF et les autres équipements figurant sur le chemin des flux de trafic. Ces paramètres peuvent être :
- QCI (QoS Class Identifier): identifiant de classe de qualité de service ;
- ARP (Allocation Retention Priority): priorité pour l'allocation et le maintien de ressources ;
- MBR (Maximum Bit Rate), AMBR (Average MBR), GBR (Guaranteed Bit Rate): débit maximum, débit maximum moyen, débit garanti, dans le sens descendant et le sens montant.

Par exemple une entité PCRF transmet à la PCEF des règles autorisant ou non l'établissement d'un "bearer" avec une qualité de service donnée, limitant éventuellement la bande passante utilisable pour ce "bearer", autorisant ou non la transmission d'un paquet émis par un terminal ou destiné à ce terminal sur ce "bearer", en fonction des champs d'entête du paquet. Les règles liées à l'émission de paquets à l'intérieur d'un "bearer" sont également transmises au terminal. On considère que leur application est effectuée dans un module logiciel non modifiable par l'utilisateur. Typiquement, dans un terminal de type smartphone avec un architecture à deux processeurs, l'application des règles est effectuée par un logiciel s'exécutant au niveau du processeur BaseBand (bande de base, parfois appelé modem) et non pas d'une application tournant au niveau du processeur d'applications.

Dans les réseaux 5G, il est envisagé que la qualité de service soit gérée directement au niveau de la couche IP, en particulier en s'appuyant sur le marquage, par les applications exécutées par le terminal, des paquets émis par les applications, selon le mécanisme Diffserv défini dans la norme RFC2475 par l'IETF ("Internet Engineering Task Force", détachement d'ingénierie d'Internet). Il reste possible pour l'opérateur d'effectuer un certain nombre de contrôles, mais avec des inconvénients portant sur la qualité de service, sur le mécanisme d'autorisation, et sur le traitement de la bande passante montante.

En effet, la qualité de service pour les paquets émis par un terminal jusqu'à l'équivalent en 5G de la P-GW sera uniquement dépendante du marquage opéré par le terminal ou par l'application elle-même, sans lien avec les politiques de l'opérateur.

De plus, un éventuel blocage de paquets vers des destinations non autorisées ne pourra être effectué qu'au niveau de l'équivalent en 5G de la P-GW, le trajet entre terminal et P-GW consommant inutilement des ressources en bande passante.

Enfin, un éventuel dépassement de bande passante montante ne pourra être traité qu'au niveau de l'équivalent en 5G de la P-GW, mais seulement après que les paquets excédentaires aient emprunté un chemin sur lequel de la bande passante est utilisée inutilement.

La demande de brevet US2012/131222 décrit une méthode où un terminal détecte un flux consommant une bande passante excessive et émet un signal vers un noeud Openflow afin que ce flux soit traité de façon appropriée. Le signal peut être un paquet du flux en question, et utiliser une partie de l'entête du paquet pour véhiculer une instruction. Le noeud Openflow transmet le paquet avec l'instruction à un contrôleur Openflow qui lui répondra avec des entrées de tables de routage adaptées au routage du flux. Un des buts de l'invention est de remédier à ces inconvénients de l'état de la technique.

### 3. Exposé de l'invention

L'objet de l'invention est de remédier à ces inconvénients en faisant effectuer par le terminal des contrôles imposés par l'opérateur avant l'émission d'un paquet. Elle peut également trouver une application dans le cadre d'une évolution des réseaux 3G ou 4G avec qualité de service différentiée à l'intérieur d'un "bearer".

L'invention vient améliorer la situation à l'aide d'un procédé suivant les revendications 1 à 4.

Contrairement à la technique antérieure, le terminal analyse lui-même et peut donc lui-même décider s'il peut émettre un paquet, et comment il doit le faire, c'est-à-dire avec quels paramètres de QoS pour le paquet, sans utiliser de requête vers une passerelle externe, telle que la P-GW, et sans que celle-ci établisse au préalable un "bearer". Le terminal appliquant lui-même les politiques d'émission des paquets, sous contrôle de l'opérateur, il n'est donc plus nécessaire d'établir un "bearer" préalablement à l'émission de paquets.

Lorsque le traitement à appliquer à un paquet n'est pas immédiatement identifiable, contrairement à la technique antérieure où un équipement de réseau externe au terminal est interrogé, le terminal interroge un module de sécurité, logiciel ou matériel, installé dans le terminal, pouvant être compris dans une carte UICC (Universal Integrated Circuit Card, ou carte universelle à circuit intégré) aussi connue sous le nom de carte SIM (Subscriber Identification Module, ou module d'identification d'abonné), ou dans l'équivalent d'une carte UICC pour les réseaux 5G.

Les paramètres transmis dans le message de requête peuvent être par exemple des paramètres compris dans l'entête du premier paquet, tels par exemple que le code DiffServ, l'adresse IP de destination, le port de destination, ou le protocole de transport à utiliser. L'entête d'un paquet, par exemple, contient des informations sur la nature du flux de paquets et de la qualité de service qu'un tel flux requiert ou doit recevoir. Une partie de l'entête du premier paquet peut donc être suffisante pour que le message de requête soit correctement traité par son destinataire, ce qui simplifie la construction du message de requête.

Dans un mode de réalisation, l'étape de réception d'un message de réponse est suivie d'une étape d'ajout, dans une table, d'une règle de routine basée sur l'instruction et destinée à être appliquée à des paquets du flux suivant le premier paquet.

Grâce à cet aspect, les étapes d'interrogation du module de sécurité sont évitées, pour tous les paquets d'un flux hormis le premier qui est le seul dont l'analyse a nécessité l'interrogation du modulé de sécurité. L'analyse est simplifiée et se réduit à l'application d'une règle de routine basée sur une instruction qui est elle-même basée sur une règle de traitement établie par l'opérateur. Dans une autre mode de réalisation, l'étape d'analyse comprend une étape de recherche dans la table d'une règle de routine qu'il est possible d'associer au premier paquet. Autrement dit, l'analyse complète avec interrogation du module de sécurité n'est nécessaire que pour le premier paquet d'un même flux applicatif.

Dans un mode de réalisation, le message de requête comprend le premier paquet et le message de réponse comprend le deuxième paquet.

Grâce à cet aspect, le mécanisme dit "Packet-In/Packet-Out" d'un protocole tel qu'OpenFlow peut être utilisé entre le terminal et son module de sécurité. Dans un tel protocole, lorsqu'un émetteur de flux reçoit le premier paquet d'un nouveau flux, il interroge un contrôleur, dit contrôleur OpenFlow, afin de savoir comment acheminer le flux. Il le fait en émettant vers le contrôleur ce premier paquet, appelé Packet-In. Le contrôleur répond en lui renvoyant un paquet appelé Packet-Out, identique au Packet-In sauf pour l'entête qui est modifié pour comprendre toutes les instructions nécessaires au bon acheminement non seulement de ce premier paquet mais aussi des paquets suivants dans le flux.

Selon cet aspect, le premier paquet du procédé est un Packet-In, le deuxième paquet est un Packet-Out, et le module de sécurité, c'est-à-dire par exemple la carte SIM, comprend un contrôleur OpenFlow.

Dans un mode de réalisation, un paquet comprend un entête et des données utiles, et le deuxième paquet basé sur le premier comprend un entête différent de l'entête du premier paquet.

Grâce à cet aspect, les données utiles dans les paquets d'un flux ne sont pas modifiées dans un deuxième paquet. C'est l'entête des paquets qui est modifié et contient des indications sur le traitement à appliquer au flux.

Les différents aspects du procédé de contrôle qui viennent d'être décrits peuvent être mis en oeuvre indépendamment les uns des autres ou en combinaison les uns avec les autres.

L'invention concerne aussi un procédé suivant les revendications 5 à 7.

Contrairement à la technique antérieure, où les règles de traitement propres à un opérateur sont stockées dans des équipements du réseau (PCRF, fonction PCEF de la P-GW), un terminal mettant en oeuvre le procédé de détermination selon l'invention peut appliquer avec rigueur les politiques d'émission de paquets telles qu'elles sont déterminées par son opérateur, et ce, sans passer par une requête vers le réseau, car les règles de traitement sont stockées dans le module de sécurité.

Ce module de sécurité est local au terminal, et est un module logiciel ou matériel, pouvant être compris dans une carte UICC ("Universal Integrated Circuit Card", ou carte universelle à circuit intégré), aussi connue sous le nom de carte SIM ("Subscriber Identification Module", ou module d'identification d'abonné), ou dans l'équivalent d'une carte UICC pour les réseaux 5G. Le contenu de la carte SIM étant contrôlé exclusivement par l'opérateur auquel est abonné l'utilisateur de l'abonné, l'intégrité et l'authenticité des règles de traitement qui sont appliquées aux paquets sont assurées. En d'autres termes, le niveau de sécurité d'une carte SIM empêche que son contenu soit modifié par un autre acteur que l'opérateur qui l'a remis à l'utilisateur du terminal. Ainsi, il n'est pas possible à l'utilisateur de modifier les règles de traitement des flux, règles qui sont propres à l'opérateur et à la façon dont il gère son réseau.

Dans un mode de réalisation, le procédé de détermination comprend une étape préalable d'obtention de l'au moins une règle de traitement de la part d'un noeud de réseau géré par l'opérateur.

Grâce à cet aspect, les règles de traitement utilisées par le module de sécurité pour déterminer des instructions d'émission peuvent être téléchargées ou mises à jour en fonction de l'évolution des politiques d'émission de paquets de l'opérateur, à partir d'une entité située dans le plan de contrôle du réseau de l'opérateur, à l'aide d'un protocole adapté.

L'invention concerne encore un module de sécurité suivant la revendication 8.

Un tel module de sécurité est apte à mettre en oeuvre dans tous ses modes de réalisation le procédé de détermination qui vient d'être décrit. Il peut être installé dans une carte SIM ou l'une de ses variantes telles que mini-SIM ou micro-SIM, étant entendu qu'une telle carte peut être insérée de façon amovible dans un terminal mobile.

Alternativement, ce module de sécurité peut être intégré de façon non-amovible dans l'électronique du terminal, sous la forme d'un module connu sous le nom de "Soft-SIM" (SIM logicielle).

L'invention concerne également un terminal mobile suivant les revendications 9 et 10.

Le procédé de contrôle décrit plus haut est destiné à être mis en oeuvre, dans l'un quelconque de ses modes de réalisation, dans un tel terminal mobile, équipé ou non d'une carte SIM ou d'un module soft-SIM.

Le procédé de contrôle décrit plus haut peut être mis en oeuvre dans un terminal apte à fonctionner avec un ou plusieurs opérateurs, chaque opérateur gérant un module de sécurité installé dans le terminal sous la forme d'un module soft-SIM.

L'invention concerne aussi un système comprenant un terminal mobile et au moins un module de sécurité.

Le procédé de contrôle peut être mis en oeuvre en combinaison avec le procédé de détermination décrit plus haut, dans un système combinant un terminal et au moins un module de sécurité installé dans le terminal sous la forme d'une carte SIM gérée par un opérateur. Un tel système peut également comprendre un terminal et une combinaison d'au moins une carte SIM avec au moins un module soft-SIM.

L'invention concerne encore un programme d'ordinateur comprenant des instructions pour la mise en oeuvre des étapes du procédé de contrôle qui vient d'être décrit, lorsque ce procédé est exécuté par un processeur.

L'invention concerne aussi un support d'enregistrement lisible par un terminal mobile, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne encore un programme d'ordinateur comprenant des instructions pour la mise en oeuvre des étapes du procédé de détermination qui vient d'être décrit, lorsque ce procédé est exécuté par un processeur.

L'invention concerne enfin un support d'enregistrement lisible par un module de sécurité tel que par exemple une carte SIM, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple de vue d'ensemble d'un terminal mobile et d'un module de sécurité, selon un aspect de l'invention,
- la figure 2 présente de façon schématique un exemple de mise en oeuvre des étapes d'un procédé de contrôle, selon l'invention,
- la figure 3 présente de façon schématique un exemple de mise en oeuvre des étapes d'un procédé de détermination, selon l'invention,
- la figure 4 présente un exemple de structure d'un terminal mobile mettant en oeuvre le procédé de contrôle, selon un aspect de l'invention,
- la figure 5 présente un exemple de structure d'un module de sécurité mettant en oeuvre le procédé de détermination, selon un aspect de l'invention.

### 5. Description détaillée d'au moins un mode de réalisation de l'invention

Dans la suite de la description, on présente des exemples de plusieurs modes de réalisation de l'invention se basant sur les normes LTE, mais l'invention s'applique également à d'autres normes telles que 3G, par exemple avec une qualité de service différentiée à l'intérieur d'un "bearer", ou à des normes à venir telles que 5G.

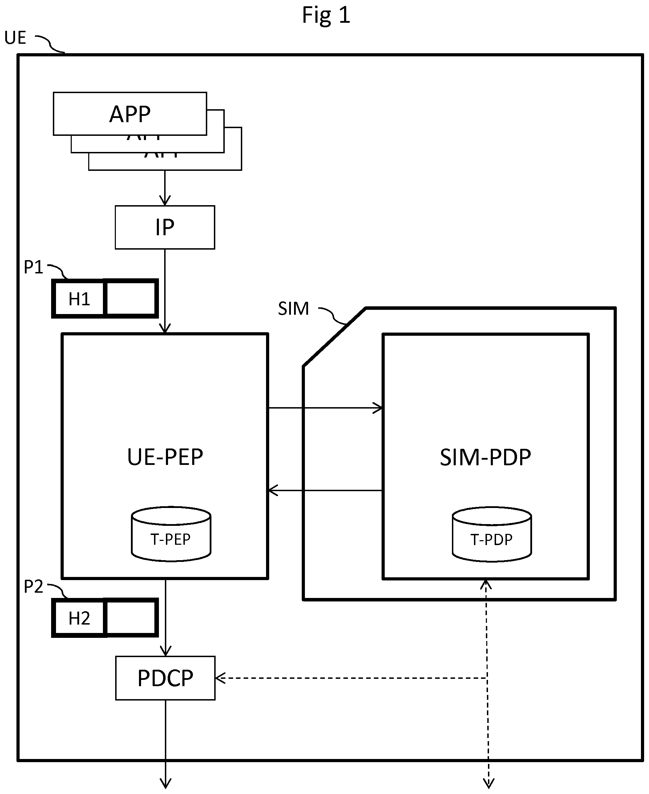

La **figure 1** présente un exemple de vue d'ensemble d'un terminal mobile et d'un module de sécurité, selon un aspect de l'invention.

Un module SIM-PDP contrôlant les flux de paquets émis par le terminal est installé sur la carte SIM (UICC) du terminal mobile. La carte SIM possédant l'avantage d'être non modifiable par l'utilisateur, ce module profite du même avantage.

Le module SIM-PDP joue le rôle de PDP ("Policy Decision Point", point de décision sur la base d'une politique) au sens de la norme RFC2753, et le terminal, ou plus précisément le module UE-PEP du terminal qui est de préférence mis en oeuvre dans une partie du terminal non modifiable par l'utilisateur, joue le rôle de PEP ("Policy Enforcement Point", point d'application d'une politique) au sens de la norme RFC2753.

Comme illustré sur la figure 1, une des applications APP téléchargées par le terminal ou natives, transmet à la couche IP du terminal les paquets P1 qu'elle souhaite émettre, après les avoir éventuellement marqués à l'aide d'un code DiffServ. Avant de transmettre un paquet P1 aux couches sous-jacentes (par exemple la couche PDCP en LTE, pour "Packet Data Convergence Protocol", protocole de convergence pour le transport de données en mode paquet), la couche IP transmet le paquet P1 au module UE-PEP qui sollicite l'avis du module SIM-PDP, qui répond au module UE-PEP en lui donnant les instructions appropriées, par exemple laisser passer ou non le paquet, modifier tel ou tel champ de l'entête H1 du paquet P1 (par exemple le code DiffServ). Le paquet P2 effectivement émis par le terminal peut donc être différent du paquet P1, en particulier son entête H2 par rapport à l'entête H1. Le module SIM-PDP peut aussi fournir des instructions qui s'appliquent à l'ensemble des paquets correspondant à un même flux de paquets (par exemple, une limitation de bande passante).

Le module SIM-PDP détermine les instructions à transmettre en fonction de règles de traitement déterminées par la politique de l'opérateur, et en fonction du profil de l'utilisateur, du type de flux, etc. Chaque règle de traitement associe une ou plusieurs actions à une ou plusieurs conditions portant typiquement sur les valeurs des champs de l'entête H1 du paquet P1. Ces règles peuvent avoir été chargées à la création de la carte SIM.

De plus pour des raisons d'optimisation, le module SIM-PDP peut fournir au module UE PEP une liste de règles lors du démarrage du terminal, ou en réponse à une sollicitation du module UE-PEP concernant un paquet particulier. Afin d'exploiter ces règles, avant de solliciter le module SIM-PDP, le module UE-PEP vérifie donc dans une table T-PEP s'il ne dispose pas déjà de règles, dites règles de routine, sur la manière de traiter le paquet P1.

Le module SIM-PDP peut également recevoir une mise à jour des règles, directement de la part d'un équipement du réseau géré par l'opérateur, par exemple en utilisant le mécanisme OTA ("Over The Air", par l'air) défini par l'organisme OMA ("Open Mobile Alliance", alliance mobile ouverte).

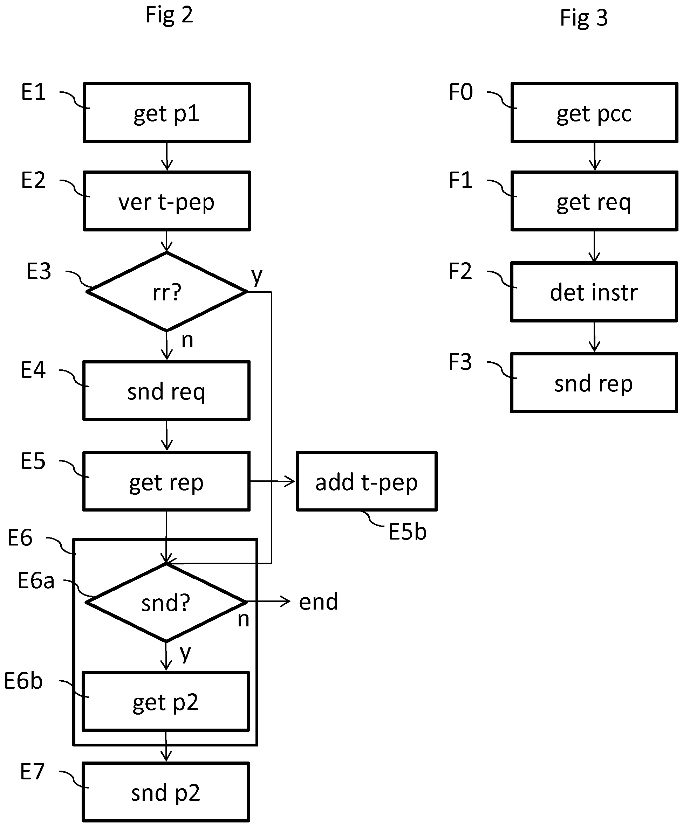

La **figure 2** présente de façon schématique un exemple de mise en oeuvre des étapes d'un procédé de contrôle, selon l'invention.

Le procédé de contrôle permet à un terminal d'effectuer des contrôles imposés par l'opérateur avant l'émission d'un paquet.

Lors d'une étape E1, un module UE-PEP du terminal, dit module de contrôle, obtient un paquet P1 faisant partie d'un flux de paquets générés par une application de communication tournant sur le terminal.

En fonction à la fois de paramètres présents dans l'entête H1 du paquet P1, et de la politique de gestion de réseau de l'opérateur auquel le terminal est rattaché par abonnement, différents traitements doivent être appliqués au paquet P1 et éventuellement aux autres paquets du même flux. Le module de contrôle est chargé de contrôler cela.

Lors d'une étape E2, le module de contrôle vérifie donc dans une table T-PEP si elle comprend une instruction, dite instruction de routine, correspondant au traitement que le paquet P1 doit subir. Cela est fait par exemple en recherchant dans la table T-PEP une instruction avec un identifiant du flux identique à celui auquel appartient le paquet P1, cet identifiant étant compris dans l'entête H1 du paquet P1.

Lors d'une étape E3 d'aiguillage, le procédé continue vers une étape E4 si une telle instruction de routine n'existe pas ou bifurque vers une étape E6 d'exécution, décrite plus bas, si l'instruction de routine existe.

Lors d'une étape E4, le module de contrôle émet un message de requête vers un module de sécurité SIM-PDP, le message de requête comprenant au moins une partie de l'entête H1 du paquet P1. Ce message de requête a pour but de déterminer quel traitement doit être appliqué par le terminal au paquet P1. Ce traitement doit être conforme à la politique de gestion de flux de l'opérateur sur son réseau, et c'est pourquoi le module de sécurité SIM-PDP est sécurisé pour que les règles de traitement qu'il comprend ne soient modifiables que par l'opérateur.

Lors d'une étape E5, le module de contrôle reçoit un message de réponse en provenance du module de sécurité SIM-PDP, le message de réponse comprenant une instruction relative au paquet P1, établie en fonction d'une règle de traitement propre à l'opérateur.

Lors d'une étape E5b optionnelle et consécutive à l'étape E5, le module de contrôle ajoute dans la table T-PEP l'instruction reçue.

Lors d'une étape E6, l'instruction reçue lors de l'étape E5, relative au paquet P1 est exécutée par le module de contrôle UE-PEP. Cette étape comprend une première sous-étape E6a d'aiguillage, où le procédé continue vers une deuxième sous-étape E6b si l'instruction comprend une autorisation d'émettre le paquet P1, ou bifurque vers une étape E8 si l'instruction comprend une interdiction d'émettre le paquet P1.

Lors de la sous-étape E6b, le module de contrôle prépare un paquet P2 à émettre, qui peut différer du paquet P1 en fonction de l'instruction. Par exemple, l'instruction reçue peut être de modifier le champ d'entête contenant le code DiffServ qui sert à établir avec quelle priorité le paquet sera acheminé dans le réseau.

En général, le paquet P2 diffère du paquet P1 uniquement par son entête H2 et non par les données utiles qu'il contient.

Enfin, lors d'une étape E7, le terminal émet le paquet P2, avec les mêmes données utiles que le paquet P1, et avec un entête H2 éventuellement différent de l'entête H1 du paquet P1.

Lors de l'étape E8 exécutée en cas d'interdiction d'émettre le paquet P1, le terminal empêche l'émission du paquet P1, et empêche éventuellement l'émission de paquets du même flux que P1. Eventuellement, l'application qui a généré le paquet P1 détecte que ses paquets ne sont pas émis et peut mettre fin à ce flux.

On comprend que les étapes E4 et E5 ne sont réalisées que pour un premier paquet d'un nouveau flux, et pas pour les paquets suivants de ce flux.

La **figure 3** présente de façon schématique un exemple de mise en oeuvre des étapes d'un procédé de détermination, selon l'invention.

Le procédé de détermination permet à un terminal de déterminer quels contrôles imposés par l'opérateur doivent être effectués avant l'émission d'un paquet.

Lors d'une étape F1, un module SIM-PDP accessible par le terminal, dit module de sécurité, reçoit un message de requête en provenance du terminal, le message de requête comprenant au moins une partie du paquet P1, en général tout ou partie de son entête H1. Dans un mode de réalisation, le message de requête peut également comprendre le paquet P1 en entier. Ce message de requête correspond à celui qui est émis lors de l'étape E4 du procédé de contrôle qui vient d'être décrit en relation avec la figure 2.

Lors d'une étape F2, le module de sécurité détermine une instruction relative à l'émission du paquet P1, en se basant sur une table T-PDP de règles de traitement. Cette table T-PDP comprend les règles de traitement conformes à la politique de gestion de flux de l'opérateur sur son réseau. La règle qui doit s'appliquer au paquet P1 dépend de paramètres caractérisant le flux auquel appartient P1 et compris dans le message de requête, tels que par exemple le code DiffServ, ou l'adresse IP de destination, le port de destination, le protocole de transport (UDP ou TCP), qui sont aussi des paramètres de l'entête H1 du paquet P1.

L'instruction peut être d'émettre un paquet P2, avec les mêmes données utiles que le paquet P1, et avec un entête H2 éventuellement différent de l'entête H1 du paquet P1, ou elle peut être de ne pas émettre de paquet du tout.

Si l'instruction est d'émettre un paquet P2, le contenu de ce paquet est aussi déterminé lors de cette étape F2.

Lors d'une étape F3, le module de sécurité émet vers le terminal un message de réponse comprenant l'instruction déterminée. Ce message de réponse correspond à celui qui est reçu lors de l'étape E5 du procédé de contrôle qui vient d'être décrit en relation avec la figure 2.

Lors d'une étape F0 indépendante de l'étape F1, le module de sécurité obtient au moins une règle de traitement établie par l'opérateur, par un protocole adapté, et les stocke dans la table T-PDP. Des règles de traitement peuvent avoir été installées initialement lors de la personnalisation de la carte SIM, puis être mises à jour en fonction de l'évolution de la politique de l'opérateur, par exemple en utilisant le mécanisme radio OTA.

Le message de requête comme le message de réponse peuvent prendre plusieurs formes. Par exemple, la communication entre le terminal et le module de sécurité peut être mise en oeuvre en établissant un canal TCP entre les deux entités, selon les procédures spécifiées dans la norme ETSI TS 102 223 ("OpenChannel related to UICC server mode", canal ouvert relatif au mode serveur de la carte UICC). Un tel canal est capable de véhiculer un protocole d'application tel que par exemple OpenFlow.

Le module SIM-PDP de la carte SIM joue alors le rôle de contrôleur OpenFlow tandis que le module UE-PEP du terminal joue le rôle de routeur OpenFlow. Avant d'émettre un paquet vers l'extérieur, le module UE-PEP vérifie (étape E2) s'il dispose localement de règle permettant de déterminer comment le traiter et sinon le transmet (étapes E4, F1) au module SIM-PDP au moyen du message Packet-In. Le module SIM-PDP examine le paquet (étape F2) et répond (étapes F3, E5) par un message Packet-Out contenant ce paquet, éventuellement modifié (étape F2b), et une liste d'actions, typiquement "set-queue" pour diriger le paquet vers une file d'attente et "output on port X" où port X désigne une interface de sortie pour autoriser sa propagation (étapes E6, E7). De plus, pour éviter de surcharger la carte SIM en lui transmettant tous les paquets à émettre par le terminal, le module UE-PEP est configuré (étape E5b) de telle sorte que les prochains paquets du même flux puissent être traités de manière autonome par celui-ci (étapes E3, E6). Pour cela le module SIM-PDP peut transmettre au module UE-PEP une commande de configuration de table sous la forme d'un message "modify flow entry" (OFPT_FLOW_MOD), en plus du message Packet-Out.

Une mise en oeuvre alternative consiste à faire évoluer l'interface entre terminal et module de sécurité pour y introduire des messages spécifiques aux échanges applicatifs entre les deux entités.

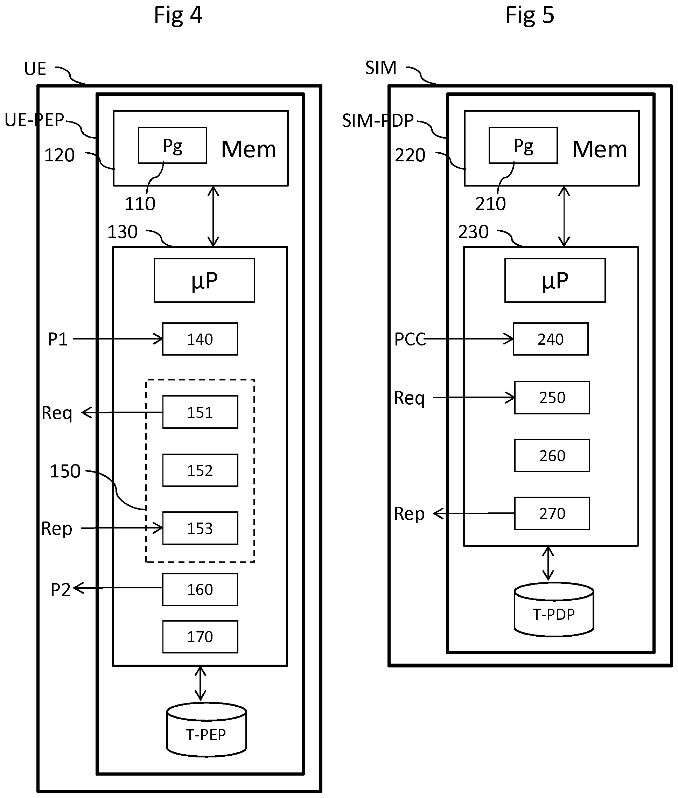

En relation avec la **figure 4**, on présente maintenant un exemple de structure d'un terminal mobile mettant en oeuvre le procédé de contrôle, selon un aspect de l'invention.

Le module UE-PEP met en oeuvre le procédé de contrôle, dont différents modes de réalisation viennent d'être décrits.

Un tel module UE-PEP peut être mis en oeuvre dans un terminal mobile UE apte à se connecter à un réseau de la génération LTE ou ultérieure.

Par exemple, le module UE-PEP comprend une unité de traitement 130, équipée éventuellement d'un microprocesseur µP, et pilotée par un programme d'ordinateur 110, stocké dans une mémoire 120 et mettant en oeuvre le procédé de contrôle selon l'invention. A l'initialisation, les instructions de code du programme d'ordinateur 110 sont par exemple chargées dans une mémoire RAM, avant d'être exécutées par le processeur de l'unité de traitement 130.

Un tel module UE-PEP comprend :
- un module d'obtention 140, apte à obtenir un paquet P1 généré par une application installée dans le terminal mobile UE, le paquet P1 faisant partie d'un flux destiné à être émis par le terminal sur un réseau de communications géré par un opérateur,
- un module d'analyse 150, apte à analyser le paquet P1 à l'aide d'au moins une règle de traitement établie par l'opérateur ou au moins une règle de routine stockée dans une table T-PEP comprise dans le terminal UE,

- un module d'émission 160, apte à émettre un paquet P2 basé sur le paquet P1 et conforme à au moins une règle de traitement établie par l'opérateur, en fonction du résultat de l'analyse, et si le résultat de l'analyse autorise l'émission,
- un module d'ajout 170, apte à ajouter une règle de routine dans la table T-PEP basée sur le résultat de l'analyse et destinée à être appliquée à des paquets du flux suivant le paquet P1.

Le module UE-PEP peut aussi comprendre:
- un module d'émission 151, apte à émettre un message de requête Req vers un module de sécurité SIM-PDP, le message de requête comprenant au moins un paramètre basé sur le paquet P1,
- un module de réception 152, apte à recevoir un message de réponse Rep en provenance du module de sécurité SIM-PDP, le message de réponse comprenant une instruction relative au paquet P1 établie en fonction d'au moins une règle de traitement établie par l'opérateur,
- un module de recherche 153, apte à rechercher dans la table T-PEP une règle de routine correspondant au paquet P1.

En relation avec la **figure 5**, on présente maintenant un exemple de structure d'un module de sécurité mettant en oeuvre le procédé de détermination, selon un aspect de l'invention.

Le module SIM-PDP met en oeuvre le procédé de contrôle, dont différents modes de réalisation viennent d'être décrits.

Un tel module SIM-PDP peut être mis en oeuvre par exemple dans une carte SIM, mini-SIM ou micro-SIM. Un tel module SIM-PDP peut être également mis en oeuvre dans un module logiciel intégré dans l'électronique du terminal UE, connu sous l'appellation Soft-SIM. Le terme "carte SIM" utilisé ci-dessous désigne l'une quelconque de ces formes de réalisation, comprenant SIM, mini-SIM, micro-SIM, soft-SIM.

Par exemple, le module SIM-PDP comprend une unité de traitement 230, équipée par exemple d'un microprocesseur µP, et pilotée par un programme d'ordinateur 210, stocké dans une mémoire 220 et mettant en oeuvre le procédé de contrôle selon l'invention. A l'initialisation, les instructions de code du programme d'ordinateur 210 sont par exemple chargées dans une mémoire RAM, avant d'être exécutées par le processeur de l'unité de traitement 230.

Un tel module SIM-PDP comprend :
- un module d'obtention 240, apte à obtenir au moins une règle de traitement PCC établie par un opérateur et à la stocker dans une table T-PDP,
- un module de réception 250, apte à recevoir un message de requête Req en provenance du terminal, le message de requête comprenant au moins un paramètre basé sur un paquet P1 généré par une application installée dans le terminal mobile UE associé à la carte SIM, le paquet P1 faisant partie d'un flux destiné à être émis par le terminal UE sur un réseau de communications géré par l'opérateur,
- un module de détermination 260, apte à déterminer une instruction relative à l'émission du paquet du flux, y compris, s'il y a lieu, le contenu d'un paquet P2 se basant sur le paquet P1, en fonction d'au moins une règle de traitement comprise dans la table T-PDP,
- un module d'émission 270, apte à émettre un message de réponse Rep vers le terminal UE, le message de réponse comprenant l'instruction déterminée.

Les modules décrits en relation avec les figures 4 ou 5 peuvent être des modules matériels ou logiciels.

## Revendications

1. **Procédé** de contrôle d'un flux de paquets généré par une application (APP) installée dans un terminal mobile (UE), le flux étant destiné à être émis par le terminal sur un réseau de communications géré par un opérateur, le procédé comprenant les étapes suivantes mises en oeuvre dans le terminal, pour tout ou partie des paquets générés par l'application :
• obtention (E1) d'un paquet du flux, dit premier paquet (P1), comprenant un premier entête (H1) et des données utiles,
• préparation (E6) d'un deuxième paquet (P2) par modification du premier entête (H1) en un deuxième entête (H2), en fonction d'au moins une règle de traitement conforme à une politique de gestion de flux de l'opérateur sur son réseau et d'au moins un paramètre du premier entête (H1), le deuxième paquet (P2) comprenant le deuxième entête (H2) et les données utiles,
• émission (E7) par le terminal du deuxième paquet (P2).

2. **Procédé** de contrôle selon la revendication 1, où l'étape de préparation est précédée des étapes suivantes :
• une étape (E4) d'émission d'un message (Req) de requête vers un module de sécurité (SIM-PDP) installé dans le terminal, le message de requête comprenant l'au moins un paramètre du premier entête (H1),
• une étape (E5) de réception d'un message (Rep) de réponse en provenance du module de sécurité (SIM-PDP), le message de réponse comprenant une instruction relative à l'émission du deuxième paquet (P2), l'instruction étant basée sur l'au moins un paramètre et établie en fonction de l'au moins une règle de traitement.

3. **Procédé** de contrôle selon la revendication 2, où l'étape (E5) de réception d'un message de réponse est suivie d'une étape (E5b) d'ajout, dans une table (T-PEP), d'une règle de routine basée sur l'instruction et destinée à être appliquée à des paquets du flux suivant le premier paquet (P1).

4. **Procédé** de contrôle selon l'une des revendications 2 à 3, où le message (Req) de requête comprend le premier paquet (P1) et le message (Rep) de réponse comprend le deuxième paquet (P2).

5. **Procédé** de détermination d'une instruction relative à l'émission d'un premier paquet (P1) compris dans un flux de paquets généré par une application (APP) installée dans un terminal mobile (UE), le flux étant destiné à être émis sur un réseau de communications géré par un opérateur, le procédé étant mis en oeuvre dans un module de sécurité (SIM-PDP) local au terminal et comprenant au moins une règle de traitement conforme à une politique de gestion de flux de l'opérateur sur son réseau, le procédé comprenant les étapes suivantes :
• une étape (F1) de réception d'un message (Req) de requête en provenance du terminal, le message de requête comprenant au moins un paramètre d'un entête (H1) du premier paquet (P1),
• détermination (F2) d'une instruction relative à l'émission d'un deuxième paquet (P2), en fonction de l'au moins une règle de traitement et de l'au moins un paramètre,
• une étape (F3) d'émission d'un message (Rep) de réponse vers le terminal, le message de réponse comprenant l'instruction déterminée.

6. **Procédé** de détermination selon la revendication 5, comprenant une étape préalable (F0) d'obtention de l'au moins une règle de traitement de la part d'un noeud de réseau géré par l'opérateur.

7. **Procédé** de détermination selon l'une des revendications 5 à 6, où le message (Req) de requête comprend le premier paquet (P1) et le message (Rep) de réponse comprend le deuxième paquet (P2).

8. **Module de sécurité** (SIM) destiné à être installé dans un terminal mobile (UE) apte à émettre un flux de paquets généré par une application (APP) installée dans le terminal mobile et destiné à être émis sur un réseau de communications géré par un opérateur, le module de sécurité comprenant :
• un module (240) d'obtention et de stockage d'au moins une règle de traitement (PCC) conforme à une politique de gestion de flux de l'opérateur sur son réseau ,
• un module (250) de réception d'un message (Req) de requête en provenance du terminal, le message de requête comprenant au moins un paramètre d'un entête (H1) d'un paquet (P1) du flux,
• un module (260) de détermination d'une instruction relative à l'émission du paquet du flux, en fonction de l'au moins une règle de traitement et de l'au moins un paramètre,
• un module (270) d'émission d'un message (Rep) de réponse vers le terminal, le message de réponse comprenant l'instruction déterminée.

9. **Terminal mobile** (UE) apte à émettre un flux de paquets généré par une application (APP) installée dans le terminal mobile et destiné à être émis sur un réseau de communications géré par un opérateur, le terminal comprenant :
• un module (140) d'obtention d'un paquet du flux, dit premier paquet (P1), comprenant un premier entête (H1) et des données utiles,
• un module de préparation d'un deuxième paquet (P2) par modification du premier entête (H1) en un deuxième entête (H2), en fonction d'au moins une règle de traitement conforme à une politique de gestion de flux de l'opérateur sur son réseau et d'au moins un paramètre du premier entête (H1), le deuxième paquet (P2) comprenant le deuxième entête (H2) et les données utiles,
• un module (160) d'émission par le terminal du deuxième paquet (P2).

10. **Terminal mobile** (UE) selon la revendication 9, comprenant au moins un module de sécurité (SIM) selon la revendication 8.

11. **Système** comprenant un terminal mobile (UE) selon l'une des revendications 9 à 10, et au moins un module de sécurité (SIM) selon la revendication 8.

12. **Programme d'ordinateur** (110) comprenant des instructions pour la mise en oeuvre des étapes du procédé de contrôle selon la revendication 1, lorsque ce procédé est exécuté par un processeur.

13. **Programme d'ordinateur** (210) comprenant des instructions pour la mise en oeuvre des étapes du procédé de détermination selon la revendication 5, lorsque ce procédé est exécuté par un processeur.

## Patentansprüche

1. Verfahren zum Steuern eines Paketstroms, der von einer Anwendung (APP) erzeugt wird, die in einem mobilen Endgerät (UE) installiert ist, wobei der Strom dazu bestimmt ist, von dem Endgerät über ein Kommunikationsnetz übertragen zu werden, das von einem Betreiber verwaltet wird, wobei das Verfahren für alle oder einige der von der Anwendung erzeugten Pakete die folgenden in dem Endgerät durchgeführten Schritte aufweist:
• Erhalten (E1) eines Pakets des Stroms, genannt erstes Paket (P1), aufweisend eine erste Kopfzeile (H1) und Nutzdaten,
• Herstellen (E6) eines zweiten Pakets (P2) durch Ändern der ersten Kopfzeile (H1) in eine zweite Kopfzeile (H2) in Abhängigkeit von mindestens einer Verarbeitungsregel, die einer Verwaltungsstrategie des Betreibers für den Strom auf seinem Netzwerk entspricht, und mindestens einem Parameter der ersten Kopfzeile (H1), wobei das zweite Paket (P2) die zweite Kopfzeile (H2) und die Nutzdaten aufweist,
• Senden (E7) des zweiten Pakets (P2) durch das Endgerät.

2. Steuerverfahren nach Anspruch 1, wobei die folgenden Schritte dem Herstellenschritt vorausgehen:
• einen Schritt (E4) zum Senden einer Anfragenachricht (Req) an ein Sicherheitsmodul (SIM-PDP), das in dem Endgerät installiert ist, wobei die Anfragenachricht den mindestens einen Parameter der ersten Kopfzeile (H1) aufweist,
• einen Schritt (E5) zum Empfangen einer Antwortnachricht (Rep) von dem Sicherheitsmodul (SIM-PDP), wobei die Nachricht einen Befehl aufweist, der sich auf das Senden des zweiten Pakets (P2) bezieht, wobei der Befehl auf dem mindestens einem Parameter basiert und in Abhängigkeit von der mindestens einer Verarbeitungsregel erstellt wird.

3. Steuerverfahren nach Anspruch 2, wobei auf Schritt (E5) zum Empfangen einer Antwortnachricht ein Schritt (E5b) zum Anfügen einer Routineregel in einer Tabelle (T-PEP) folgt, die auf dem Befehl basiert und dazu bestimmt ist, auf Pakete des Stroms angewendet zu werden, die auf das erste Paket (P1) folgen.

4. Steuerverfahren nach einem der Ansprüche 2 bis 3, wobei die Anfragenachricht (Req) das erste Paket (P1) aufweist und die Antwortnachricht (Rep) das zweite Paket (P2) aufweist.

5. Verfahren zum Bestimmen eines Befehl, der sich auf das Senden eines ersten Pakets (P1) bezieht, das in einem Paketstrom enthalten ist, der von einer Anwendung (APP) erzeugt wird, die in einem mobilen Endgerät (UE) installiert ist, wobei der Strom dazu bestimmt ist, über ein Kommunikationsnetz übertragen zu werden, das von einem Betreiber verwaltet wird, wobei das Verfahren in einem lokalen Sicherheitsmodul (SIM-PDP) im Endgerät durchgeführt wird und mindestens eine Verarbeitungsregel aufweist, die einer Verwaltungsstrategie des Betreibers für den Strom auf seinem Netzwerk entspricht, wobei das Verfahren die folgenden Schritte aufweist:
• einen Schritt (F1) zum Empfangen einer Anfragenachricht (Req) von dem Endgerät, wobei die Anfragenachricht mindestens einen Parameter einer Kopfzeile (H1) des ersten Pakets (P1) aufweist,
• Bestimmen (F2) eines Befehls in Bezug auf das Senden eines zweiten Pakets (P2) in Abhängigkeit von der mindestens einer Verarbeitungsregel und von dem mindestens einen Parameter,
• einen Schritt (F3) zum Senden einer Antwortnachricht (Rep) an das Endgerät, wobei die Antwortnachricht den bestimmten Befehl aufweist.

6. Bestimmungsverfahren nach Anspruch 5, aufweisend einen vorhergehenden Schritt (F0) zum Erhalten der mindestens einen Verarbeitungsregel von einem Netzwerkknoten, der von dem Betreiber verwaltet wird.

7. Bestimmungsverfahren nach einem der Ansprüche 5 bis 6, wobei die Anfragenachricht (Req) das erste Paket (P1) aufweist und die Antwortnachricht (Rep) das zweite Paket (P2) aufweist.

8. Sicherheitsmodul (SIM), das dazu bestimmt ist, in einem mobilen Endgerät (UE) installiert zu werden, das in der Lage ist, einen Paketstrom zu senden, der von einer Anwendung (APP) erzeugt wird, die in dem mobilen Endgerät installiert ist, und der dazu bestimmt ist, auf einem Kommunikationsnetzwerk gesendet zu werden, das von einem Betreiber verwaltet wird, wobei das Sicherheitsmodul aufweist:
• ein Modul (240) zum Erhalten und zum Speichern mindestens einer Verarbeitungsregel (PCC), die einer Verwaltungsstrategie des Betreibers für den Strom auf seinem Netzwerk entspricht,
• ein Modul (250) zum Empfangen einer Anfragenachricht (Req) von dem Endgerät, wobei die Anfragenachricht mindestens einen Parameter einer Kopfzeile (H1) eines Pakets (P1) des Stroms aufweist,
• ein Modul (260) zum Bestimmen eines Befehls in Bezug auf das Senden des Pakets des Stroms in Abhängigkeit von der mindestens einer Verarbeitungsregel und von dem mindestens einen Parameter,
• ein Modul (270) zum Senden einer Antwortnachricht (Rep) an das Endgerät, wobei die Antwortnachricht den bestimmten Befehl aufweist.

9. Mobiles Endgerät (UE), das in der Lage ist, einen Paketstrom zu senden, der von einer Anwendung (APP) erzeugt wird, die in dem mobilen Endgerät installiert ist, und der dazu bestimmt ist, auf einem Kommunikationsnetzwerk gesendet zu werden, das von einem Betreiber verwaltet wird, wobei das Endgerät aufweist:
• ein Modul (140) zum Erhalten eines Pakets des Stroms, genannt erstes Paket (P1), aufweisend eine erste Kopfzeile (H1) und Nutzdaten,
• ein Modul zum Herstellen eines zweiten Pakets (P2) durch Änderung der ersten Kopfzeile (H1) in eine zweite Kopfzeile (H2) in Abhängigkeit von mindestens einer Verarbeitungsregel, die einer Verwaltungsstrategie des Betreibers für den Strom auf seinem Netzwerk entspricht, und mindestens einem Parameter der ersten Kopfzeile (H1), wobei das zweite Paket (P2) die zweite Kopfzeile (H2) und die Nutzdaten aufweist,
• ein Modul (160) zum Senden des zweiten Pakets (P2) durch das Endgerät.

10. Mobiles Endgerät (UE) nach Anspruch 9, aufweisend mindestens ein Sicherheitsmodul (SIM) nach Anspruch 8.

11. System, aufweisend ein mobiles Endgerät (UE) nach einem der Ansprüche 9 bis 10 und mindestens ein Sicherheitsmodul (SIM) nach Anspruch 8.

12. Computerprogramm (110), aufweisend Befehle zum Durchführen aller Schritte des Steuerverfahrens nach Anspruch 1, wenn dieses Verfahren von einem Prozessor ausgeführt wird.

13. Computerprogramm (210), aufweisend Befehle zum Durchführen aller Schritte des Bestimmungsverfahrens nach Anspruch 5, wenn dieses Verfahren von einem Prozessor ausgeführt wird.

## Claims

1. **Method** for controlling a packet stream generated by an application (APP) installed in a mobile terminal (UE), the stream being intended to be transmitted by the terminal over a communications network managed by an operator, the method comprising the following steps implemented in the terminal, for all or some of the packets generated by the application:
• obtaining (E1) of a packet of the stream, called first packet (P1), comprising a first header (H1) and payload data,
• preparation (E6) of a second packet (P2) by modifying the first header (H1) to a second header (H2), according to at least one processing rule conforming to a stream management policy of the operator on its network and to at least one parameter of the first header (H1), the second packet (P2) comprising the second header (H2), and the payload data,
• transmission (E7) by the terminal of the second packet (P2).

2. **Control method** according to Claim 1, wherein the preparation step is preceded by the following steps:
• a step (E4) of transmission of a request message (Req) to a security module (SIM-PDP) installed in the terminal, the request message comprising at least one parameter of the first header (H1),
• a step (E5) of reception of a response message (Rep) from the security module (SIM-PDP), the response message comprising an instruction relating to the transmission of the second packet (P2), the instruction being based on the at least one parameter and established according to the at least one processing rule.

3. **Control method** according to Claim 2, wherein the step (E5) of reception of a response message is followed by a step (E5b) of addition, in a table (T-PEP), of a routine rule based on the instruction and intended to be applied to packets of the stream following the first packet (P1).

4. **Control method** according to one of Claims 2 and 3, wherein the request message (Req) comprises the first packet (P1) and the response message (Rep) comprises the second packet (P2).

5. **Method** for determining an instruction relating to the transmission of a first packet (P1) included in a packet stream generated by an application (APP) installed in a mobile terminal (UE), the stream being intended to be transmitted over a communications network managed by an operator, the method being implemented in a security module (SIM-PDP) local to the terminal and comprising at least one processing rule conforming to a stream management policy of the operator on its network, the method comprising the following steps:
• a step (F1) of reception of a request message (Req) from the terminal, the request message comprising at least one parameter of a header (H1) of the first packet (P1),
• determination (F2) of an instruction relating to the transmission of a second packet (P2), according to the at least one processing rule and to the at least one parameter,
• a step (F3) of transmission of a response message (Rep) to the terminal, the response message comprising the determined instruction.

6. **Determination method** according to Claim 5, comprising a preliminary step (F0) of obtaining the at least one processing rule from a network node managed by the operator.

7. **Determination method** according to one of Claims 5 and 6, wherein the request message (Req) comprises the first packet (P1) and the response message (Rep) comprises the second packet (P2).

8. **Security module** (SIM) intended to be installed in a mobile terminal (UE)capable of transmitting a packet stream generated by an application (APP) installed in the mobile terminal and intended to be transmitted over a communications network managed by an operator, the security module comprising:
• a module (240) for obtaining and storing at least one processing rule (PCC) conforming to a stream management policy of the operator on its network,
• a module (250) for receiving a request message (Req) from the terminal, the request message comprising at least one parameter of a header (H1) of a packet (P1) of the stream,
• a module (260) for determining an instruction relating to the transmission of the packet of the stream, according to the at least one processing rule and to the at least one parameter,
• a module (270) for transmitting a response message (Rep) to the terminal, the response message comprising the determined instruction.

9. **Mobile terminal** (UE) capable of transmitting a packet stream generated by an application (APP) installed in the mobile terminal and intended to be transmitted over a communications network managed by an operator, the terminal comprising:
• a module (140) for obtaining a packet of the stream, called first packet (P1), comprising a first header (H1) and payload data,
• a module for preparing a second packet (P2) by modifying the first header (H1) to a second header (H2), according to at least one processing rule conforming to a stream management policy of the operator on its network and to at least one parameter of the first header (H1), the second packet (P2) comprising the second header (H2) and the payload data,
• a module (160) for transmitting, from the terminal, the second packet (P2).

10. **Mobile terminal** (UE) according to Claim 9, comprising at least one security module (SIM) according to Claim 8.

11. **System** comprising a mobile terminal (UE) according to one of Claims 9 and 10, and at least one security module (SIM) according to Claim 8.

12. **Computer program** (110) comprising instructions for implementing all the steps of the control method according to Claim 1, when this method is executed by a processor.

13. **Computer program** (210) comprising instructions for implementing all the steps of the determination method according to Claim 5, when this method is executed by a processor.
